# NEUE EUROPÄISCHE PATENTSCHRIFT

(11) **EP 0 188 807 B2**
(45) Veröffentlichungstag und Bekanntmachung des Hinweises auf die Entscheidung über den Einspruch: **26.05.1993**
(45) Hinweis auf die Patenterteilung: 02.11.1988
(21) Anmeldenummer: 85116493.9
(22) Anmeldetag: 23.12.1985
(51) Int. Cl.: B01J 13/02, B41M 5/00

(54) **Verfahren zur Mikroverkapselung von Ölen mit darin gelösten Farbreaktionspartnern, danach hergestellte Mikrokapseln und deren Verwendung in Farbreaktionsaufzeichnungssystemen**
Process for encapsulating oils containing products which produce a colour by reaction, microcapsules produced by said process and their use in carbon papers
Procédé de micro-encapsulation d'huiles contenant en solution des produits produisant une couleur par réaction, microcapsules ainsi préparées et leur utilisation dans les papiers copiants

(30) Priorität: 24.12.1984 DE 3447299
(43) Veröffentlichungstag der Anmeldung: 30.07.1986
(73) Patentinhaber: Papierfabrik August Koehler AG, D-77696 Oberkirch (DE)
(72) Erfinder: Pietsch, Günther, D-3004 Isernhagen HB (DE); Schrader, Karl-Heinz, D-3000 Hannover 1 (DE)
(74) Vertreter: Hagemann, Heinrich, Dr.rer.nat., Dipl.-Chem.

(56) Entgegenhaltungen:
- EP-A- 0 026 914
- DE-A- 2 147 237
- DE-A- 3 114 035
- GB-A- 2 073 132
- US-A- 3 778 383
- US-A- 4 100 103
- US-A- 4 105 823
- Kirk-Othmer, Enzyklopedia of Chemical Technology, Vol. 8, 3rd Ed. 1979, S. 919-922
- Firmenprospekt der Firma BIP Beetle Paper Resins, "Principles of Wet Strengthening Paper by Stock Addition", July 1979

## Beschreibung

Die Erfindung betrifft ein Verfahren zur Mikroverkapselung von hydrophoben Ölen mit darin gelösten Farbreaktionspartnern von Farbreaktionssystemen durch Umsetzung eines wasserlöslichen, nicht- ionogenen Melamin-Formaldehyd-Vorkondensats und eines wasserlöslichen Polymerisats in einer Ölin-Wasser -Dispersion unter üblichem Rühren zur Ausbildung der Kapselhülle sowie in Gegenwart einer dispersionsstabilisierenden Verbindung.

Verfahren obiger Art sind bekannt. Die danach herstellbaren Mikrokapsein, die in der Regel eine ölige hydrophobe Lösung des Farbbildners (eine homogene Substanz) enthalten, werden im allgemeinen in üblicherweise auf die Unterseite eines Papierblattes, dem CB-Blatt, aufgetragen. Dieses CB-Blatt kann mit einem sogenannten CF-Blatt in Kontakt stehen, bei dem die dem CB-Blatt zugewandte Oberfläche mit einem für den Farbbildner sauren Reaktionspartner beschichtet ist. Der saure Reaktionspartner kann z. B. ein säurebehandelter Ton, wie Montmorillonitton, oder auch ein niedrig-molekulares Phenolharz, wie ein Phenol-Formaldehyd-Novolak-Harz, sein. Handelt es sich bei dem sauren Reaktionspartner um eine in öligen hydrophoben Flüssigkeiten lösliche saure Verbindung, dann kann sie ebenfalls eingekapselt werden. Bei dem Druckvorgang werden die erwähnten Kapseln durch die Drucktypen zerschlagen. Dadurch treten die Reaktionspartner miteinander in Kontakt und liefern auf dem CF-Blatt ein farbiges Zeichen. Die beiden genannten Farbreaktionspartner können auch auf der Oberfläche eines einzigen Blattes aufgebracht werden, um ein sogenanntes autogenes System zu erhalten. Hier empfiehlt es sich, beide Reaktionspartner einzukapseln, sofern der saure Reaktionspartner in dem Öl löslich ist, um eine unerwünschte vorzeitige Reaktion der Reaktionspartner auszuschließen.

Zur Herstellung der Kapselhüllen von für Vervielfältigungszwecke in Farbreaktionssystemen vorgesehenen Mikrokapseln gibt es verschiedene Einkapselungsverfahren. Diese beruhen z. B. auf dem Einsatz von Gelatinekoazervat-, Polyisocyanat-, Polyamid- oder Aminoplast-Systemen. Das eingangs beschriebene Verfahren geht von einem Aminoplast-System aus, bei dem ein wasserlösliches nicht-ionogenes Melamin-Formaldehyd-Vorkondensat mit einem damit reaktionsfähigen wasserlöslichen Polymerisat unter Ausbildung der Kapselhülle umgesetzt wird. Dieses Verfahren hat in jüngster Zeit ansteigende Bedeutung erlangt. Es ist relativ leicht steuerbar und läuft unter vergleichsweise milden Reaktionsbedingungen ab, so daß selbst sehr empfindliche Farbbildner im Verlaufe der Reaktion unbeeinträchtigt bleiben.

Detailliert wird ein Verfahren der eingangs genannten Art in der DE-2 652 875 beschrieben. Danach wird von einem wasserlöslichen Harnstoff-Formaldehyd-Vorkondensat, einem wasserlöslichen nicht-ionogenen Melamin-Formaldehyd-Vorkondensat sowie einem damit reaktionsfähigem wasserlöslichen Polymerisat ausgegangen. Das Polymerisat soll bei der Dispersionsstabilisierung aufgrund einer Wechselwirkung mit dem Harnstoff-Formaldehyd-Vorkondensat eine Rolle spielen. Es handelt sich hier um ein komplexes Reaktionssystem mit vielfältigen schwierig einzuregelnden Verfahrensparametern. Eine zufriedenstellende Dispersionsstabilisierung wird nur dann erreicht, wenn das Harnstoff-Formaldehyd-Vorkondensat zusammen mit dem wasserlöslichen Polymerisat in einem emulgierten System vorgegeben und nach einer Vorreaktion der weitere Reaktionspartner in Form des wasserlöslichen Melamin-Formaldehyd-Vorkonsensats hinzugegeben wird. Aus der DE-A-2 940 786 ist ein ähnliches Verfahren bekannt, dessen besonderes Kennzeichen in der Verwendung eines wasserlöslichen Polymerisats mit Sulfonsäuregruppen, das frei von Phenyl- und/oder Sulfophenylgruppen sein muß, liegt. Auch hier stellen sich die bereits angesprochenen Stabilisierungsprobleme ein. Zur Behebung dieser Probleme kann auch die GB-A-1 389 238 keine wesentlichen Anregungen geben. Danach wird ein flüssiges Reaktionssystem, das die Kapselhüllenausgangsmaterialien sowie eine aus einem Aminoplast-Vorkondensat erhaltene spezielle oberflächenaktive Substanz enthält, einem Sprühtrocknungsverfahren unterzogen. Hierbei laufen die Kapselbildungsreaktion sowie das Verdampfen der flüssigen Phase praktisch schlagartig ab. Verhältnisse dieses Verfahrens lassen sich unter keinem Gesichtspunkt auf solche übertragen, die für die vorstehend genannten Verfahren wichtig sind.

Die DE-A-3 114 035 beschreibt ein Verfahren der eingangs genannten Art, wonach zunächst eine dispersionsstabilisierende chemische Spezies durch die Umsetzung eines wasserlöslichen Melamin-Formaldehyd-Vorkondensats und eines wasserlöslichen Polymerisats gebildet wird, wobei diese beiden Reaktionspartner für sich allein für die ölhaltige Emulsion nicht dispersionsstabilisierend sind. Es schließt sich unter sauren Bedingungen die Kapselwandbildung unter Einschluß des den Farbreaktionspartner gelöst enthaltenden hydrophoben Öls an. Bis zum Einsetzen der Kapselwandbildung soll möglichst eine klare Lösung vorliegen. Wird das wasserlösliche Melamin-Formaldehyd-Vorkondensat aufgrund einer speziellen Eigenart einer Teikondensation unterzogen, dann wird diese Teilkondensation umgehend abgebrochen, sobald eine Trübung auftritt. Hiermit soll gewährleistet werden, daß das Melamin-Formaldehyd-Vorkondensat für die späteren Wandbildungsmechanismen in optimaler Menge im gelösten Zustand zur Verfügung steht, da das ausgefällte Produkt diese Mechanismen beeinträchtigen oder gar ausschließen würde. In der Praxis hat es sich gezeigt, daß dieses bekannte Verfahren im Hinblick auf die Dispersionsstabilisierung und auf eine schnelle Verfahrensführung verbesserungsbedürftig ist.

Die DE-A-2 147 237 befaßt sich mit einem Verfahren zur Einkapselung einer in einer Flüssigkeit feinverteilten Substanz mit Hilfe von Tensiden. Bei den Tensiden handelt es sich vorzugsweise um Harnstoff- oder Melamin-Formaldehyd-Verbindungen, die sowohl mit hydrophoben als auch mit hydrophilen Gruppen substituiert sind. Zweckmäßigerweise soll zuerst eine Primäremulsion bzw. -dispersion hergestellt werden, die die einzukapselnden Materialien enthält. Zu dieser Dispersion wird die Lösung eines üblichen Aminoplast-Vorkondensats gegeben. Das Reaktivtensid wird gleichzeitig mit dem Aminoplast-Vorkondensat unter Bildung der Kapseln polykondensiert. Das reaktive Tensid ist vorzugsweise ein spezielles methylolgruppenhaltiges Aminoplast-Vorkondensat. Entsprechendes geht aus der weitgehend inhaltsgleichen US-A-3 778 383 hervor.

Der Erfindung lag die Aufgabe zugrunde, das eingangs bezeichnete Verfahren so weiterzubilden, daß es bei optimaler Dispersionsstabilisierung einfach und insbesondere schnell durchführbar ist und eine zufriedenstellende Mikrokapselqualität liefert.

Erfindungsgemäß wird diese Aufgabe dadurch gelöst, daß eine saure wäßrige Lösung eines kationaktiven Melamin-Formaldehyd-Vorkondensats und die wäßrige Lösung des wasserlöslichen Polymerisats unter starkem Rühren gemischt werden, wodurch sich das Melamin-Formaldehyd-Vorkondensat aus dieser Mischung in feinster Suspension ausscheidet und im weiteren Verfahrensablauf dispersionsstabilisierend ist, die das feinst-suspendierte Melamin-Formaldehyd-Vorkondensat enthaltende Mischung unter starkem Rühren mit dem den Farbreaktionspartner gelöst enthaltenden Öl gemischt wird, die hierdurch entstandene stabilisierte ÖI-in-Wasser-Dispersion auf einen pH-Wert von 3 bis 6 eingestellt und eine wäßrige Lösung des wasserlöslichen, nicht- ionogenen Melamin-Formaldehyd-Vorkondensats zur Ausbildung der Kapselhülle hinzugefügt wird, wobei unter starkem Rühren die Einstellung optimaler Turbulenzen unter Ausschluß störender laminarer Verhältnisse zu verstehen ist.

Das Wesen des erfindungsgemäßen Verfahrens besteht demzufolge in dem Einsatz zweier unterschiedlicher Melamin-Formaldehyd-Vorkondensate. Auf ihre speziellen Unterschiede und Funktionen wird nachfolgend noch eingegangen werden. Die weiteren Ausgangsmaterialien sowie Verfahrensparameter können im Rahmen der bekannten Verfahrensweise auf der Grundlage der Reaktion Melamin-Formaldehyd-Vorkondensat/Polymerisat weitesten Schwankungen unterliegen. Die nachfolgende Beschreibung soll daher bezüglich dieser allgemein bekannten Verfahrensgrößen nur ein bevorzugtes Vorgehen umrei- ßen.

Die Fähigkeit des wasserlöslichen Polymerisats, mit Melamin-Formaldehyd-Vorkondensaten in chemische Wechselwirkung zu treten, ergibt sich durch die Anwesenheit geeigneter, insbesondere Zerewitinoffaktive Wasserstoffatome tragender funktioneller Gruppen in dem Polymerisat. Derartige funktionelle Gruppen, die mit Melamin-Formaldehyd-Vorkondensaten in Reaktion treten, sind bekannt. Hierzu zählen insbesondere Säure-, Amid-, Amino, Imino-, Ester-, Ether-, Hydroxyl-, Urethan-, Thiol- oder Mercaptan-Gruppen. Bevorzugte Beispiele für derartige Polymerisate sind Polyvinylalkohol, Gelatine und Maleinsäureanhydrid-Copolymere, insbesondere Ethylen/Maleinsäureanhydrid-Copolymerisate oder Styrol/Maleinsäureanhydrid-Copolymerisate. Besonders bevorzugt sind Acrylamid/Acrysäure-Copolymerisate- Stärke, Zellulosederivate, wie Carboxymethylzellulose (CMC) oder Hydroxyethylzellulose (HEC), Alginate, wie Natriumalginat, Polyurethane und Polyethylenoxid.

An das nicht-ionogene Melamin-Formaldehyd-Vorkondensat sind verschiedene Anforderungen zu stellen. Zunächst muß es wasserlöslich sein. Darüber hinaus muß es mit den Zerewitinoff-aktiven Wasserstoffatomen des erwähnten wasserlöslichen Polymerisats in saurem Medium reaktionsfähig sein. Ferner muß es eine herabgesetzte Eigenreaktionsfähigkeit aufweisen. Die Herabsetzung der Reaktivität läßt sich durch zumindest teilweise Blockierung der aktiven Methylolgruppen erreichen. Hierzu geeignete Verfahren sind bekannt (vgl. Kunststoffhandbuch, Bd. X, Duroplaste, S. 173). So kann die gewünschte Reaktivität des nicht-ionogenen (oligomeren) Melamin-Formaldehyd-Vorkondensats durch partielle Methylierung eingestellt werden. In der europäischen Patentschrift 0 026 914 wird ein solches Produkt, das z. B. pro Mol Melamin 5,25 Mole Formaldehyd und 2,3 Mole Methyläthergruppen enthält, beschrieben. Diesen Anforderungen genügen im wesentlichen die Handelsprodukte Madurit MW 112@ der Firma Cassella AG (vgl. hierzu "Kunstharze Hoechst, Technisches Merkblatt", Ausgabe September 1982), BC 336@ der BIP Chemicals Limited und Resin 42 - 91@ der Rousselot GmbH.

Durch die Herabsetzung der Reaktionsfähigkeit des mit dem wasserlöslichen Polymerisat in Reaktion tretenden nicht-ionogenen Melamin- Formaldehyd-Vorkondensat wird es gewährleistet, daß der Einkapselungsvorgang nicht zu schnell abläuft. Damit wird eine unerwünschte Agglomeratbildung bzw. das Ausflocken größerer Teilchen vermieden. Agglomerate bzw. größere Teilchen führen beim späteren Druckvorgang mit dem entsprechend hergestellten Druckpapier zu nachteiligen Erscheinungen, so zu einer undeutlichen Schrift. Nicht-ionogene methylierte Melamin-Formaldehyd-Vorkondensate des erwähnten Methylierungsgrades besitzen im allgemeinen die wünschenswerte Reaktivität und werden daher im Rahmen der Erfindung bevorzugt. Es lassen sich für die Zwecke der Erfindung aber auch Mischungen unterschiedlich reaktiver nicht-ionogener Melamin-Formaldehyd-Vorkondensate verwenden. In Einzelfällen kann es von Vorteil sein, die Reaktivität des zur Verfügung stehenden nicht-ionogenen Melamin-Formaldehyd-Vorkondensates zu steuern, was durch Zugabe von Formaldehyd geschehen kann.

Das im Rahmen der Erfindung eingesetzte kationaktive bzw. kationisierbare Melamin-Formaldehyd-Vorkondensat unterscheidet sich grundsätzlich von dem nicht-ionogenen Melamin-Formaldehyd-Vorkondensat hinsichtlich der Funktion bei der Verfahrensdurchführung wie auch der Reaktivität gegenüber dem wasserlöslichen Polymerisat. Während bei dem nicht-ionogenen Melamin-Formaldehyd-Vorkondensat die Reaktivität beispielsweise durch Methylierung auf ein optimales Maß herabgesetzt wird, muß sich das kationaktive Melamin-Formaldehyd-Vorkondensat gerade durch eine vergleichsweise hohe Reaktivität auszeichnen. Die aktiven Methyolgruppen haben somit vorzugsweise ihre volle Reaktivität und sind nicht blockiert, z. B. durch Methylierung. Bevorzugt ist es daherweitgehend frei von Methyloläthergruppen, d. h. es ist möglichst nicht partiell methyliert etc.. Diesen Anforderungen genügen im wesentlichen z. B. die Handelsprodukte Madurit MW 150@ der Firma Cassella AG (vgl. "Kunstharze Hoechst, Technisches Merkblatt", Ausgabe 1980), Urecoll MP-Pulver® der BASF AG (vgl. Technische Information Ti/P 2631d) und Parez Resin 607@ der Cyanamid GmbH (Merkblatt Nr. 2950-01).

Die vorstehenden Erläuterungen machen es deutlich, daß als kationaktives Melamin-Formaldehyd-Vorkondensat vorzugsweise ein solches verwendet wird, dessen Methylolgruppen in der Weise veräthert vorliegen, daß eine hohe Reaktionsfähigkeit gegenüber dem wasserlöslichen Polymeren gewährleistet ist.

Das Öl, in dem der Farbbildner oder dessen saurer Reaktionspartner, sofern es sich hier um eine lösliche Verbindung (z. B. eine phenolische Verbindung) handelt, gelöst sind, stellt ein hydrophobes Material dar, das gegenüber Wasser inert ist. Es ist in Wasser praktisch unlöslich bzw. damit nicht mischbar. Eine geringe Löslichkeit ist vernachlässigbar. Bevorzugte Beispiele von Ölen, die erfindungsgemäß als Lösungsmittel der Farbreaktionspartner herangezogen werden können, sind insbesondere teilweise hydrierte Terphenyle, Chlorparaffine, alkylierte Biphenyle, Alkylnaphthaline, Diarylmethanderivate, Dibenzylbenzolderivate, Alkane, Cycloalkane und Ester, wie Phthalate, Adipate, Trimellitate und Phosphate. Zum Auflösen in diesen Ölen und zur Einkapselung kommen vielfältige Farbbildner, die in der Fachliteratur detailliert beschrieben werden, in Frage. Beispiele hierfür sind: Lacton-, Phthalid-, Fluoran-, Diphenylamin-, Spiropyran-, Auramin-, Phenothiazin-, Aminophenylpyridin- und Aminodiazaxanthenlacton-Derivate, insbesondere Kristallviolettlakton und N-Benzoylleukomethylenblau.

Die für das erfindungsgemäße Verfahren wesentlichen Ausgangsmaterialien in Form des wasserlöslichen Polymerisats, des kationaktiven Melamin-Formaldehyd-Vorkondensates und des nicht- ionogenen Melamin-Formaldehyd-Vorkondensates werden in wässriger Lösung eingesetzt. Dabei ist nichtwesentlich, in welcher Konzentration diese Ausgangsmaterialien in dem jeweiligen wässrigen Medium eingesetzt werden. So kann des wasserlösliche Polymerisat beispielsweise in etwa 2 bis 10 gew.-%- iger Lösung gewählt werden. Der Bereich von etwa 4 bis 5 Gew.-% gilt als bevorzugt, während eine 4,4 gew.-%-ige Lösung ganz besonders bevorzugt ist. Diese Werte gelten insbesondere für ein Acrylsäure-Acrylamid-Copolymerisat (bestehend aus etwa 20 bis 50 % Acrylsäure und etwa 80 bis 50 % Acrylamid des Molekulargewichts von etwa 400 000). Hervorragende Ergebnisse im Hinblick auf die Lagerstabilität und Migrationsfestigkeit der erhaltenen Mikrokapseln werden mit einem wasserlöslichen Produkt aus ca. 30 % Acrylsäure-und ca. 70 % Acrylamidgruppen enthaltendem Mischpolymerisat mit einem mittleren Molekulargewicht von ca. 400 00 erhalten. Gegen zu hohe Konzentrationen des wasserlöslichen Polymerisats können damit verbundene Viskositätsprobleme sprechen. Diese können allerdings auch dann wieder trotz relativ hoher Konzentration zurückstehen, wenn das jeweilige Polymerisat ein vergleichsweise niedriges Molekulargewicht aufweist. Hieraus ergibt es sich, daß für in der Praxis bewährte wasserlösliche Polymerisate die jeweilige optimale Konzentration im Hinblick auf die verschiedenen Anforderungen im Rahmen einfacherVorversuche ermittelt werden sollte.

Die oben genannten gewichtsprozentualen Bereiche bzw. Werte können ohne weiteres als eine Richtlinie dienen. Die Konzentration des kationaktiven Melamin-Formaldehyd-Harzes in wässriger Lösung liegt bei üblichen Handelsprodukten im allgemeinen in dem Bereich von etwa 8 bis 16 Gew.-%, wobei ein Wert von etwa 10 bis 12 Gew.-% bevorzugt ist. Diese Lösung ist schwach angesäuert und enthält beispielsweise etwa 3 bis 4 % Ameisensäure, da Melamin-Formaldehyd-Harze dieser Art lediglich im schwach sauren wässrigen Medium leicht und vollständig in Lösung gehen. Bei der Konzentration der wässrigen Lösung der nicht-ionogenen Melamin-Formaldehyd-Vorkondensate sind vergleichsweise hohe Konzentrationen von etwa 20 bis 40 Gew.-%, insbesondere 30 Gew.-% in Form der einzusetzenden Lösung gut geeignet.

Auch die Gewichtsverhältnisse, in denen die drei genannten wässrigen Lösungen bei der Durchführung des erfindungsgemäßen Verfahrens miteinandar gemischt werden, sind für die Lösung der zugrundegelegten Aufgabe nicht kritisch. Diese Verhältnisse können weiten Schwankungen unterliegen. Auch hier wird der Fachmann die optimalen Verhältnisse in Abhängigkeit von der Art der eingesetzten Materialien und ihrer Konzentration in dem jeweiligen wässrigen Medium im Rahmen geeigneter Vorversuche ohne großen Aufwand ermitteln. Aus dem nachfolgenden Beispiel lassen sich praxisgerechte Verhältnisse ermitteln, wonach etwa 7,5 Gew.-Teile einer etwa 4,5 %-igen wässrigen Polymerisatlösung auf 1 Gew.-Teil einer etwa 12 gew.-%-igen wässrigen Lösung des kationenaktiven Melamin-Formaldehyd-Harzes und hierauf wiederum 2 Gew.-Teile einer etwa 32 gew.-%- igen wässrigen Lösung des nicht-ionogenen Melamin-Formaldehyd-Harzes entfallen können.

Das bei dem erfindungsgemäßen Verfahren anzuwendende Gewichtsverhältnis von wasserlöslichem Polymerisat zu nicht-ionogenem Melamin-Formaldehyd-Vorkondensat, die die eigentlichen Reaktionspartner im Hinblick auf die Ausbildung der Kapselhülle darstellen, ist nicht kritisch. Es liegt zweckmäßigerweise in dem Bereich von etwa 0,03 : 5 bis 5 : 1 in dem Stadium des Verfahrens, in dem das Reaktionsmedium bezüglich der einzusetzenden Ausgangsmaterialien vollständig ist. Das optimale Gewichtsverhältnis von wasserlöslichem Polymerisat zu nicht-ionogenem Melamin-Formaldehyd-Vorkondensat hängt von dem jeweils verwendeten besonderen wasserlöslichen Polymerisat ab. Dabei spielt die Anzahl der Gruppen mit Zerewitinoff-aktiven Wasserstoffatomen in dem Makromolekül des wasserlöslichen Polymerisats eine Rolle. Exakterweise wäre daher an sich eine Äquivalenz-Angabe heranzuziehen. Diese Genauigkeit ist aber bei der Durchführung des erfindungsgemäßen Verfahrens nicht nötig. Vielmehr lassen sich die optimalen Verhältnisse der Ausgangsmateriaiien durch rein routinemäßige Voruntersuchungen ohne weiteres festlegen.

Die vorstehend ausgeführten Erläuterungen zum Reaktionsablauf basieren auf allgemeinen Lehren derAminoplast-Chemie, die dem Fachmann geläufig sind.

Für eine erfolgreiche Durchführung des erfindungsgemäßen Verfahrens ist es wesentlich, daß in den ersten beiden Stufen, d. h. beim Vermischen der wässrigen Lösung des kationaktiven Melamin-Formaldehyd-Vorkondensates und der wässrigen Lösung des wasserlöslichen Polymerisates sowie auch beim Vermischen dieses Mediums mit dem den Farbreaktionspartner gelöst enthaltenden Öl unter starkem Rühren gearbeitet wird. Das bedeutet, es muß mit einem hochwirksamen Dispergiergerät gemischt werden, um optimale Turbulenzen unter Ausschluß störender laminarer Verhältnisse einzustellen. Geeignete Aussagen über die Turbulenz macht die Reynolds-Zahl. Diese sollte vorzugsweise über etwa 10.000 liegen. In der Praxis haben sich Hochleistungsdispergiergeräte insbesondere solche für die Zwecke der Erfindung als vorteilhaft erwiesen, die auf dem Stator/Rotorsystem beruhen. Dieses System besteht aus Statorplatten und Rotorscheiben und wirkt auch wie eine Zentrifugalturbine.

Bei einem der bevorzugten Dispergiergeräte obigen Typs besteht folgende Konstruktion: Die Statorplatten haben Lochkreise, durch deren Löcher das Mischgut in axialer Richtung hindurchströmt. Diese Löcher liegen vertieft in symmetrisch auf beiden Seiten der Statorplatte angeordneten ringförmigen Kanälen. Die Flanken dieser Kanäle sind mit einer speziell ausgebildeten Verzahnung versehen. In den Kanälen laufen die gleichfalls ringförmig angeordneten Scherstifte der Rotorscheiben. Die vom Mischgut durchströmten Scherfelder werden abwechselnd zum einen von den verzahnten Flanken der Statorkanäle mit den Längskanten der Rotorstifte und zum anderen von der Stirnfläche der Rotorstifte mit den Lochkanten der Statorkanäle gebildet. Unter Entstehung intensiver Prall-, Reib- und Schereffekte hoher Frequenz wird das Mischgut ständig in eine Vielzahl von Einzelströmen aufgelöst und wieder gebündelt. Derartige Multifrequenz-Flüssigmischer haben bei kurzen Verweilzeiten eine hohe Mischleistung und gewährleisten das exakte Einmischen kleiner Stoffzugaben. Unter Vermeidung schädlicher Todräume ist das Eigenvolumen sehr niedrig gehalten. Hohe Impulswerte und ein starker mechanischer Effekt bewirken auch ohne überhöhte Drehzahlen eine Feindispergierung des Gutes. Große Kontaktflächen in den Mischkammern gewährleisten eine innigste Berührung derverschiedenen Komponenten. Nach diesem Prinzip arbeitet insbesondere der B & L-Multifrequenz-Flüssigmischer, System Pentax, Typ KMS 8 (Drehzahlbereich 500/3.500 UpM und Durchsatzleistung 40-800 I/h) und KMF 15 (Drehzahlbereich UpM 500/3.500 und Durchsatzleistung 150-3.000 I/h). Hierwerden die zu vermischenden Ströme über zwei gesonderte Zuführungsleitungen in den Turbulenzbereich geleitet, dort vermischt und über eine Ausgangsleitung weitergeführt. Dieses Hochleistungsdispergiergerät eignet sich vorzüglich für die kontinuierliche Verfahrensführung. Gleiches gilt für den Dispax-Reactor® (vertrieben von der Firma Jahnke & Kunkel KG), dem ein sehrähnliches System zugrundeliegt.

Des weiteren gibt es jedoch auch Hochleistungsdispergiergeräte, die sich für den chargenweisen Betrieb eignen und die ebenfalls auf den oben detailliert geschilderten Stator/Rotorsystem beruhen. Hier wird das eine zu vermischende Medium vorgegeben, mitdiesem Hochleistungsdispergiergerät gerührt und die hinzuzumischende flüssige Komponente in den sich durch den Betrieb dieses Hochleistungsdispergiergerätes ausbildenden Flüssigkeitskegel eingegeben. Im Bruchteil einer Sekunde wird die Mischstelle durch die vorliegenden Strömungsverhältnisse in die Turbulenzzone innerhalb des Hochleistungsdispergiergerätes gezogen und dort die angestrebte Dispergierung vorgenommen.

Die oben geschilderten Hochleistungsdispergiergeräte sollen nur als bevorzugte Beispiele gewertet werden. Selbstverständich kommen für die Zwecke der Erfindung auch andere Hochleistungsdispergiergeräte, d. h. auf einem anderen Prinzip beruhend, in Frage, sofern sie das gleiche angestrebte Dispergierergebnis erreichen lassen.

Im einzelnen wird bei der Durchführung des erfindungsgemäßen Verfahrens unter Heranziehen der oben genannten Ausgangsmaterialien vorzugsweise wie folgt vorgegangen: eine wässrige Lösung des wasserlöslichen Polymerisats, z. B. in etwa 2- bis 10-, vorzugsweise 4- bis 5 %-iger Konzentration, wird mit einer etwa 5- bis 20-, vorzugsweise etwa 12 %-igen sauren (pH-Wert etwa 2,5) wässrigen Lösung des kationenaktiven Melamin-Formaldehyd-Vorkondensates in einem Hochleistungsdispergiergerät unter starkem Rühren vermischt. Bei diesem Mischvorgang fällt in feinster Verteilung ein Feststoff eines Teilchendurchmessers im Mikronbereich, insbesondere in der Größenordnung von etwa einem Mikrometer, im Bruchteil einer Sekunde bzw. momentan aus. Diese Ausfällung tritt als Trübung in Erscheinung. Auf ihre besondere Bedeutung wird nachfolgend noch näher eingegangen werden. Nachdem diese Mischung aus wasserlöslichem Polymerisat und kationaktiven Melamin-Formaldehyd-Vorkondensat innerhalb kürzester Zeit hergestellt worden ist, kenn sich unmittelbar, ebenfalls unter starkem Rühren mit einem Hochleistungsdispergiergerät der obengenannten Art, die Zumischung der hydrophoben Ölphase, die den Farbreaktionspartner gelöst enthält, anschließen. Der anzustrebende Öltröpfchendurchmesser soll zwischen 2 und 10 Mikrometer, bevorzugt zwischen 4 und 6 Mikrometer liegen. Dieser Öltröpfchendurchmesser begünstigt ein gleichmäßiges Verhalten der mittels der gewonnenen Mikrokapseln hergestellten Farbreaktionssysteme, insbesondere der Farbreaktionsschreibpapiere. Das jeweils gewählte Verhältnis von Ölphase zu dem Feststoffanteil der wässrigen Phase ist nicht kritisch. In der Regel liegt dieses Gewichtsverhältnis in dem Bereich von etwa 3,5 : 2 bis 25 : 1, insbesondere etwa 5 : 1 bis 15 : 1.

Nach oder vor dem Zumischen der Ölphase wird die Mischung bzw. die ÖI-in-Wasser-Dispersion im Hinblick auf die bei der späteren Bildung der Kapselhülle ablaufenden Kondensationsreaktion, die durch Säuren katalysiert wird, sauereingestellt. Hierzu können anorganische oder organische Säuren herangezogen werden, sofern sie ausreichende Azidität aufweisen und zu keinen störenden Nebeneffekten Anlaß geben, insbesondere den in dem hydrophoben Öl gelösten Farbbildner nicht nachteilig beeinflussen. Sowerden vorzugsweise Essigsäure, Ameisensäure, Zitronensäure, Salzsäure oder auch Schwefelsäure verwendet. Der für die Kondensationsreaktion eingestellte pH-Wert liegt zwischen 3 und 6. Bevorzugt wird der Bereich von 3,5 bis 4,3. Zu hohe pH-Werte verlängern die Reaktionszeit, während zu niedrige pH-Werte unter verschiedenen Gesichtspunkten nachteilig sind. So kann ein zu niedriger pH-Wert zu einer unerwünscht frühzeitigen Verfärbung des Farbbildners in der Mikrokapsel führen. Des weiteren kann die Kondensationsreaktion auch zu schnell ablaufen, so daß sich die nachteilige Agglomeratbildung bzw. die Ausbildung größerer Teilchen einstellt.

In die in obiger Weise zubereitete Mischung wird nun die wässrige Lösung des nicht-ionogenen Melamin-Formaldehyd-Vorkondensates eingerührt. Bei diesem Mischvorgang ist es nicht wichtig, besondere Rühr- bzw. Turbulenzbedingungen einzuhalten. Übliche bekannte Rühreinrichtungen sind geeignet. Die erwähnten Hochleistungsdispergiergeräte sind jedoch hierfür nicht heranzuziehen, da sie die Ausbildung der Kapselhülle durch die Kondensationsreaktion zwischen dem wasserlöslichen Polymerisat und dem nicht-ionogenen Melamin-Formaldehyd-Vorkondensat und/oder der Eigenreaktion des nichtionogenen Melamin-Formaldehyd-Vorkondensates stören würden.

Die oben detailliert besprochenen Ausgangsmaterialien finden sich schließlich in Form einer reaktionsfähigen ÖI-in-Wasser-Dispersion, in der unter normalem Rühren während etwa 1 bis 5 Stunden, insbesondere etwa 2 bis 3 Stunden die Bildung der Kapselhülle der Mikrokapseln erfolgt.

Da die Kondensationsreaktion zwischen dem wasserlöslichen Polymerisat und dem nicht-ionogenen Melamin-Formaldehyd-Vorkondensat bzw. die Eigenkondensationsreaktionen des nichtionogenen Melamin-Formaldehyd-Vorkondensates unter Wärmezufuhr beschleunigt ablaufen, kann es wünschenswert sein, die Temperatur der einzelnen Verfahrensstufen zu steuern bzw. einzuregeln, beispielsweise durch Erwärmen.

Nach der Bildung des Reaktionsmediums wird dessen Temperatur im allgemeinen zunächst auf etwa 55° C gesteigert, um die Kondensationsreaktion und damit die Bildung der Wandung der Mikrokapseln zu optimieren. Dieser Vorgang ist im allgemeinen nach einer zweistündigen Reaktion bei 55°C, bei den obengenannten bevorzugten Bereichen des pH-Wertes, annähernd abgeschlossen. Bei einer Temperatur von weniger als 55°C erhält man regelmäßig dennoch qualitativ zufriedenstellende Mikrokapseln, wobei allerdings, wie bereits ausgeführt, eine längere Reaktionsdauer erforderlich ist. Es läßt sich auch bei Temperaturen arbeiten, die unter oder auch über 55°C liegen. Im Rahmen einfacher Routineversuche kann die besonders günstige Reaktionstemperatur für den jeweiligen Einzelfall ohne weiteres ermittelt werden.

Dem Reaktionsmedium können auch verschiedene Additive beifügt werden, so beispielsweise ein Ammoniumsalz, wie Ammoniumchlorid, das die Kondensationsreaktion in einigen Fällen beschleunigt. Wenn die Kondensationsreaktion in dem gewünschten Ausmaß abgelaufen ist, wird der pH-Wert durch Zugabe von Alkalien, insbesondere von Natriumhydroxid, Kaliumhydroxid oder Ammoniumhydroxid, neutral oder schwach alkalisch eingestellt. Hierdurch wird eine weitere Reaktion weitgehend ausgeschlossen, die zu einer Agglomeration bei der Lagerung der Mikrokapseln führen könnte. Auch wird der Korrosionseinfluß des sauren Mediums auf die Reaktionsgefäße behoben. Bei Verwendung von Ammoniumhydroxid wird vorhandener freier Formaldehyd in Form einer geruchlosen Additionsverbindung aus dem Reaktionssystem weitgehend entfernt.

Das erfindungsgemäße Verfahren kann chargenweise, aber auch kontinuierlich durchgeführt werden. Bei der kontinuierlichen Verfahrensweise wird beispielsweise die mit einem Hochleistungsdispergiergerät vorgenommene Vermischung der wässrigen Lösung des Polymerisats und des kationaktiven Melamin-Formaldehyd-Vorkondensates unmittelbar im Anschluß mittels eines weiteren Hochleistungsdispergiergerät mit der den Farbreaktionspartner enthaltenden Ölphase gemischt und danach in eine Rührkesselkaskade, in der die Kondensationsreaktion abläuft, geleitet, wobei in dem ersten Rührkessel die wässrige Lösung des nicht-ionogenen Melamin-Formaldehyd -Vorkondensates zu-dosiert werden kann. In der Praxis bietet es sich auch an, die Reaktionsmischung zunächst in einen größeren Endrührkessel einzuleiten. Sobald dieser Kessel gefüllt ist, wird das frische Reaktionsmedium in einen zweiten Rührkessel geleitet, während in dem ersten Rührkessel die Reaktion zum Abschluß gebracht wird. Die fertige Kapseldispersion wird entnommen. Anschließend kann wieder neu Reaktionsmedium zugeleitet werden, während die Kapselbildungsreaktion in dem zweiten Rührkessel abläuft. Dieses kontinuierliche Verfahren kann selbstverständlich nur als Beispiel gewertet werden. Es sind ersichtlich vielfältige Modifikationen möglich.

Das erfindungsgemäße Verfahren kann vielfältigen Modifikationen unterworfen werden, ohne daß der angestrebte Erfolg beeinträchtigt wird, sofern erfindungsgemäß zu Beginn des Verfahrensablaufes die Vermischung des wasserlöslichen Polymerisats mit dem kationaktiven Melamin-Formaldehyd-Vorkondensat der beschriebenen Art unter Ausbildung einer feinsten Suspension erfolgt. Dabei hat es sich gezeigt, daß die ausgeschiedenen feinsten festen Teilchen, die auf eine unmittelbare bzw. momentane Eigenreaktion des kationaktiven Melamin-Formaldehyd-Vorkondensat und/oder aufgrund einer Wechselwirkung zwischen dem kationaktiven Melamin-Formaldehyd-Vorkondensat und dem Polymer zurückgehen, für die angestrebte Stabilisierung entscheidend sind.

Untersuchungen haben gezeigt, daß dieses kationaktive Melamin-Formaldehyd-Vorkondensat im Bruchteil einer Sekunde ausfällt, wobei die Teilchengröße aufgrund des erforderlichen starken Rührens mit einem Hochleistungsdispergiergerät in der Größenordnung von wenigen Mikrometern und im allgemeinen etwa einem Mikrometer liegt. Es stellt sich somit eine weitgehend stabile Suspension feinster Teilchen ein. Neben diesen suspendierten Teilchen bleibt das wasserlösl iche Polymerisat weitgehend unverändert in der wäßrigen Lösung gelöst.

Im weiteren Verlauf des Verfahrens hat es sich überraschenderweise gezeigt, daß gerade diese feinst-suspendierten Teilchen eine vorzügliche Stabilisierung der einzelnen nachfolgenden Systeme bzw. Zwischensysteme bewirken. Selbst bei normalerweise bei bekannten Verfahren einen Verfahrensabbruch erforderlich machenden Störungen des Reaktionsablaufes führt diese Feinstsuspension weiterhin zu einer problemlosen Verfahrensfortführung. Mit Kenntnis der Erfindung hätte man erwarten müssen, daß auch umgesetztes kationaktives Melamin-Formaldehyd-Vorkondensat durch einfaches Einrühren in die wässrige Lösung des wasserlöslichen Polymerisats eine gleiche Wirkung entfalten würde. Das ist überraschenderweise nicht der Fall. Schließlich muß es überraschen, daß die feinst-suspendierten festen Teilchen, die der erwähnten Stabilisierung dienen, im weiteren Verlaufe des Verfahrens zu keinerlei Störungen Anlaß geben. Nach Verfahrensabschluß liegen sie neben den Mikrokapseln vor und werden in der Mikrokapseldispersion unmittelbar zur Herstellung der Farbreaktionsdurchschreibepapiere eingesetzt, die beim Schreibvorgang keinerlei Beeinträchtigungen zeigen.

Die besonderen Vorteile des erfindungsgemäßen Verfahrens bestehen darin, daß neben der außergewöhnlich günstigen Stabilisierung des Reaktionssystems die wünschenswerten Eigenschaften der Mikrokapseln erhalten bleiben. Diese zeigen eine außergewöhnlich gute Dichtigkeit, was sich durch übliche Tests nachweisen läßt. Die Kapseldispersion läßt sich aufgrund dieser Eigenschaften direkt auf saure Nehmerpapiere auftragen. Es zeigen sich keine unerwünschten Verfärbungen. Das erfindungsgemäße Verfahren ist einfach und sicher zu steuern. Die emulsionsstabilisierende Wirkung tritt innerhalb von Bruchteilen von Sekunden ein. Bei Verfahren des Standes der Technik sind hierzu oft mehrere Stunden erforderlich.

Die Erfindung soll nachfolgend anhand eines Beispiels noch näher erläutert werden.

### Beispiel

4.3 Gew.-Teile eines Acrylsäure-Acrylamid-Copolymerisats (bestehend aus etwa 30 % Acrylsäure und etwa 70 % Acrylamid) werden in 45 Gewichtsteilen Wasser gelöst. Zu dieser Lösung werden 0,8 Gew.-Teile kationaktives Melamin-Formaldehyd-Vorkondensat (Madurit MW 1500 / hergestellt von der Castella AG), gelöst in 5,6 Gew.-Teilen Wasser, dem 0,3 Gew.-Teile Ameisensäure zugesetzt werden, unter starkem Rühren mittels eines auf dem Rotor/Stator-Prinzip beruhenden Hochleistungsdispergiergerätes gegeben. Hierzu wird ebenfalls unter starkem Rühren mittels eines Hochleistungsdispergiergerätes die Lösung eines Farbbildnergemisches in einer Mischung aus 12 Gew.-Teilen Chlorparaffin (Chlorgehalt 42 %, mittlere Kohlenstoffzahl 17) und 12 Gew.-Teile Dodecylbenzol (Verschnittmittel) gegeben. Der Farbbildner besteht aus 0,6 Gew.-Teilen Kristallviolettlakton (Primärfarbbildner) und 0,2 Gew.-Teilen N-Benzoylleukomethylenblau (Sekundärfarbbildner). Es schließt sich unter normalem Rühren die Zugabe von 2,6 Gew.-Teilen einer 20 gew.-%-igen wässrigen Lösung von Ameisensäure an, um den pH-Wert des Systems auf 4,2 einzustellen. Darauf wird unter normalem Rühren die Lösung von 5,3 Gew.-Teilen nicht- ionogenen Melamin-Formaldehyd-Vorkondensats (Madurit MW 112@) in 6 Gew.-Teilen Wasser - eingemischt. Die Mischung, die sich auf Raumtemperatur befindet, wird nun langsam auf eine Temperatur von etwa 55° C erwärmt. Dieses System wird etwa 2 Stunden in Reaktion gehalten. Danach erfolgt ein Abkühlen auf Raumtemperatur. Es schließt sich die Einstellung des pH-Wertes auf etwa 9 durch Zugabe von 3,0 g wässriger konzentrierter Ammoniaklösung (25 Gew.-%) an. Hierdurch wird gleichzeitig überschüssiger Formaldehyd gebunden. Es werden Kapseln einer mittleren Teilchengröße von etwa 4 bis 7 Mikrometer hoher Dichtigkeit und ohne Agglomeratbildung gewonnen. Sie führen bei Verwendung in Reaktionsdurchschreibepapieren zu ausgezeichneten Schriftzeichen.

## Patentansprüche

1. Verfahren zur Mikroverkapselung von hydrophoben Ölen mit darin gelösten Farbreaktionspartnern von Farbreaktionssystemen durch Umsetzung eines wasserlöslichen, nicht-ionogenen Melamin-Formaldehyd-Vorkondensats und eines wasserlöslichen Polymerisats in einer Öl-in-Wasser-Dispersion unter üblichem Rühren zur Ausbildung der Kapselhülle sowie in Gegenwart einer dispersionsstabilisierenden Verbindung, dadurch gekennzeichnet, daß eine saure wäßrige Lösung eines kationaktiven Melamin-Formaldehyd-Vorkondensats und die wäßrige Lösung des wasserlöslichen Polymerisats unter starkem Rühren gemischt werden, wodurch sich das Melamin-Formaldehyd-Vorkondensat aus dieser Mischung in feinster Suspension ausscheidet und im weiteren Verfahrensablauf dispersionsstabilisierend ist, die das feinst-suspendierte Melamin-Formaldehyd-Vorkondensat enthaltende Mischung unter starkem Rühren mit dem den Farbreaktionspartner gelöst enthaltenden Öl gemischt wird, die hierdurch entstandene stabilisierte ÖI-in-Wasser-Dispersion auf einen pH-Wert von 3 bis 6 eingestellt und eine wäßrige Lösung des wasserlöslichen, nicht-ionogenen Melamin-Formaldehyd-Vorkondensats zur Ausbildung der Kapselhülle hinzugefügt wird, wobei unter starkem Rühren die Einstellung optimalerTurbulenzen unter Ausschluß störender laminarer Verhältnisse unter Verwendung eines Hochleistungsdispergiergeräts zu verstehen ist.

2. Verfahren nach Anspruch 1, dadurch gekennzeichnet, daß 0,05 bis 1,5 Gew.-Teile kationaktives Melamin-Formaldehyd-Vorkondensat, bezogen auf 1 Gew.-Teil wasserlösliches Polymerisat, hinzugefügt werden.

3. Verfahren nach Anspruch 1 oder 2, dadurch gekennzeichnet, daß als kationaktives Melamin-Formaldehyd-Vorkondensat ein solches verwendet wird, das frei von Methyoläthergruppen ist.

4. Verfahren nach einem der Ansprüche 1 bis 3, dadurch gekennzeichnet, daß als nicht-ionogenes Melamin-Formaldehyd-Vorkondensat ein partiell mit Methanol veräthertes Melamin-Formaldehyd-Vorkondensat verwendet wird.

5. Verfahren nach einem der Ansprüche 1 bis 4, dadurch gekennzeichnet, daß das starke Rühren während der Vereinigung von kationaktivem Melamin-Formaldehyd-Vorkondensat und wasserlöslichem Polymerisat sowie das Einrühren des den Farbreaktionspartner gelöst enthaltenden Öls mittels eines auf dem Rotor/Stator-Prinzip beruhenden Hochleistungsdispergiergerätes durchgeführt wird.

6. Mikrokapseln, erhältlich nach einem Verfahren nach mindestens einem der Ansprüche 1 bis 5.

7. Verwendung der Mikrokapseln nach Anspruch 6 in Farbreaktionssystemen, insbesondere in Farbreaktionsaufzeichnungspapieren.

## Claims

1. A process for the micro-encapsulation of hydrophobic oils with colour reaction partners of colour reaction systems dissolved therein by the reaction of a water-soluble, non-ionogenic melamine formaldehyde pre-condensate and a water-soluble polymerisate in an oil-in-water dispersion with ordinary agitation for the formation of the capsule envelope and in the presence of a dispersion-stabilising compound, characterised in that an aqueous acid solution of a cation-active melamine formaldehyde pre-condensate and the aqueous solution of the water-soluble polymerisate are mixed with vigorous agitation, whereby the melamine formaldehyde pre-condensate precipitates out of this mixture in extremely fine suspension and is dispersion stabilising in the further course of the process, the mixture containing the extremely finely suspended melamine formaldehyde pre-condensate is mixed with vigorous agitation with the oil containing the colour reaction partner in solution, the stabilised oil-in-water dispersion thereby produced is adjusted to a pH value of 3 to 6 and an aqueous solution of the water-soluble, non-ionogenic melamine formaldehyde pre-condensate is added for the formation of the capsule envelope, wherein by "vigorous agitation" is to be understood the creating of optimum turbulence, while excluding troublesome laminar conditions, through the use of a high-performance dispersion apparatus.

2. A process according to Claim 1, characterised in that 0.05 to 1.5 parts by weight of cation-active melamine formaldehyde pre-condensate, in relation to 1 part by weight of water-soluble polymerisate, are added.

3. A process according to Claim 1 or 2, characterised in that, as cation-active melamine formaldehyde pre-condensate, one such is used which is free from methyl ether groups.

4. A process according to any one of Claims 1 to 3, characterised in that, as non-ionogenic melamine formaldehyde pre-condensate, there is used a melamine formaldehyde pre-condensate partially etherified with methanol.

5. A process according to any one of Claims 1 to 4, characterised in that the vigorous agitation during the combining of cation-active melamine formaldehyde pre-condensate and water-soluble polymerisate and the stirring-in of the oil containing the colour reaction partner in solution are carried out by means of a high-performance dispersion apparatus operating on the rotor/stator principle.

6. Micro-capsules obtained by a process according to at least one of Claims 1 to 5.

7. The use of micro-capsules according to Claim 6 in colour-reaction systems, especially in colour-reaction copying papers.

## Revendications

1. Procédé de micro-encapsulation d'huiles hydrophobes contenant à l'état dissous des partenaires de systèmes donnant une réaction colorée, par réaction d'un précondensat mélamine-formaldéhyde hydrosoluble non ionogène et d'un polymérisat hydrosoluble dans une dispersion du type huile-dans-eau sous agitation effectuée de la manière habituelle pour la réalisation de l'enveloppe des capsules, de même qu'en présence d'un composé stabilisant la dispersion, caractérisé par le fait qu'une solution acide aqueuse d'un précondensat mélamine-formaldéhyde à activité cationique et la solution aqueuse du polymérisat hydrosoluble est mélangée sous agitation énergique, ce qui a pour effet que le précondensat mélamine-formaldéhyde se sépare de ce mélange en une très fine suspension et produit un effet stabilisant sur la dispersion pendant le développement ultérieur du procédé, le mélange contenant le précondensat mélamine-formaldéhyde en très fine suspension est mélangé sous agitation énergique avec l'huile contenant à l'état dissous le partenaire de la réaction colorée, la dispersion huile-dans-eau stabilisée ainsi produite est ajustée à un pH de 3 à 6 et une solution aqueuse du précondensat mélamine-formaldéhyde hydrosoluble non ionogène est ajoutée pour la formation de l'enveloppe des capsules, le fait d'opérer sous agitation énergique signifiant l'établissement de turbulences optimales à l'exclusion de conditions laminaires perturbatrices à l'aide d'un appareil de dispersion de grande puissance.

2. Procédé suivant la revendication 1, caractérisé en ce qu'on ajoute 0,05 à 1,5 partie en poids de précondensat mélamine-formaldéhyde cationiquement actif, pour une partie en poids de polymérisat hydrosoluble.

3. Procédé suivant la revendication 1 ou 2, caractérisé en ce qu'on utilise comme précondensat mélamine-formaldéhyde cationiquement actif un précondensat qui est dépourvu de groupes mé- thyloléther.

4. Procédé suivant l'une des revendications 1 à 3, caractérisé en ce qu'on utilise comme précondensat mélamine-formaldéhyde non ionogène un précondensat mélamine-formaldéhyde partiellement éthérifié avec du méthanol.

5. Procédé suivant l'une des revendications 1 à 4, caractérisé en ce que l'agitation énergique est effectuée pendant la réunion du précondensat mélamine-formaldéhyde cationiquement actif et du polymérisat hydrosoluble de même que l'incorporation par agitation de l'huile contenant le partenaire de la réaction colorée à l'état dissous est effectuée au moyen d'un appareil de dispersion à haut rendement basé sur le principe rotor/stator.

6. Microcapsules, obtenues par un procédé suivant au moins l'une des revendications 1 à 5.

7. Utilisation des microcapsules suivant la revendication 6 dans des systèmes à réaction colorée, notamment dans des papiers copiants à réaction colorée.
